# EUROPEAN PATENT APPLICATION

(11) **EP 4 826 375 A2**
(43) Date of publication of application: **21.10.2026**
(21) Application number: 26203103.2
(22) Date of filing: 23.09.2021
(51) Int. Cl.: G01N 30/02

(54) **CHROMATOGRAPHY COLUMN**

(30) Priority: 30.09.2020 US 202063085730 P
(62) Document number(s) of the earlier application(s) in accordance with Art. 76 EPC: 21876234.2 / 4 222 490
(71) Applicant: Agilent Technologies, Inc., Santa Clara, CA 95051 (US)
(72) Inventor: VON DOEHREN, Norwin Rolf Leonhard, Santa Clara CA (US); BENNEN, Wilroy E., Santa Clara CA (US)
(74) Representative: Grünecker Patent- und Rechtsanwälte PartG mbB

(57) **Abstract**

A chromatography column includes a first flow distributor, a second flow distributor, and a media chamber having an inlet and an outlet. The second flow distributor is different from the first flow distributor. The first flow distributor is secured to the inlet of the media chamber and the second flow distributor is secured to the outlet of the media chamber.

## Description

### FIELD OF THE INVENTION

The present disclosure relates to an improved column useful in chromatography, such as high performance liquid chromatography (HPLC). The improved column provides superior flow characteristics.

### BACKGROUND

In separation procedures, particularly liquid chromatography, it is critical that the mobile phase and the sample undergoing analysis be delivered to the separation media uniformly throughout the cross-section of the media to ensure efficient operation of the column and to attain accurate results. In the existing columns, when fluid is introduced into the column, it has a tendency to penetrate the media to a considerable depth before spreading out, thereby reducing the efficiency and effectiveness of the media. Thus, to take full advantage of the separation media, it is desirable to construct a column that disperses the entering fluid throughout the cross-sectional area of the column and maintains a uniform flow through the media.

### SUMMARY OF THE INVENTION

In an aspect, a chromatography column includes a first flow distributor, a second flow distributor different from the first flow distributor, and a media chamber having an inlet and an outlet. The first flow distributor is secured to the inlet of the media chamber and the second flow distributor is secured to the outlet of the media chamber.

In another aspect, the first flow distributor includes an opening having a first surface area and the second flow distributor includes an opening having a second surface area.

In a further aspect, the first surface area is smaller than the second surface area.

In yet another aspect, the first flow distributor includes a plurality of openings and the second flow distributor includes one opening.

In an aspect, the plurality of openings in the first flow distributor includes a sum surface area that is different from a surface area of the one opening in the second flow distributor.

In another aspect, the sum surface area of the plurality of openings in the first flow distributor is smaller than the surface area of the opening in the second flow distributor.

In a further aspect, the first flow distributor includes a first plurality of openings and the second flow distributor includes at least one opening, wherein each of the first plurality of openings includes a diameter that is smaller than a diameter of at least one opening in the second flow distributor.

In yet another aspect, the first flow distributor is a showerhead-like flow distributor and the second flow distributor is an open dispersion flow distributor.

In an aspect, a chromatography column includes a first flow distributor, a second flow distributor, and a media chamber positioned between the first flow distributor and the second flow distributor. The first flow distributor and the second flow distributor include a design that reduces a parabolic flow profile at outlet.

In another aspect, to reduce the parabolic flow profile at outlet, the first flow distributor is different from the second flow distributor.

In a further aspect, the first flow distributor includes an opening having a first surface area and the second flow distributor includes an opening having a second surface area.

In yet another aspect, the first flow distributor includes a plurality of openings and the second flow distributor includes one opening.

In an aspect, the first flow distributor includes a first plurality of openings and the second flow distributor includes at least one opening. Each of the first plurality of openings includes a diameter that is smaller than a diameter of the at least one opening in the second flow distributor.

In another aspect, the first flow distributor is a showerhead-like flow distributor and the second flow distributor is an open dispersion flow distributor.

In a further aspect, a method for reducing a parabolic flow profile in a chromatography column includes securing a first flow distributor at inlet of a media chamber and securing a second flow distributor at outlet of the media chamber, wherein the first flow distributor is different from the second flow distributor.

In yet another aspect, the first flow distributor includes an opening having a first surface area and the second flow distributor includes an opening having a second surface area, wherein the first surface area is smaller than the second surface area.

In an aspect, the first flow distributor includes a plurality of openings and the second flow distributor includes one opening.

In another aspect, the first flow distributor includes a first plurality of openings and the second flow distributor includes at least one opening, wherein each of the first plurality of openings includes a diameter that is smaller than a diameter of the at least one opening in the second flow distributor.

In a further aspect, a flow distributor includes an opening on exterior surface of the flow distributor and a plurality of channels positioned on interior surface of the flow distributor. Each of the plurality of channels on the interior surface of the flow distributor is in fluid communication with the opening on the exterior surface of the flow distributor.

In yet another aspect, each of the plurality of channels includes a first length or a second length.

Additional features and advantages of various embodiments will be set forth, in part, in the description that follows, and will, in part, be apparent from the description, or may be learned by the practice of various embodiments. The objectives and other advantages of various embodiments will be realized and attained by means of the elements and combinations particularly pointed out in the description herein.

### DRAWINGS

FIG. 1 is an explosive view of a chromatography column, according to an example.
FIG. 2 is a front perspective view of a showerhead-like flow distributor, according to an example.
FIG. 3 is a front perspective view of an open dispersion flow distributor, according to an example.
FIG. 4 is a front perspective view of a multi-hole flow distributor, according to an example.
FIG. 5 is a top view of a new flow distributor, according to an example.
FIG. 6 is a rear view of the new flow distributor, according to an example.

The same part numbers designate the same or similar parts throughout the figures.

### DESCRIPTION

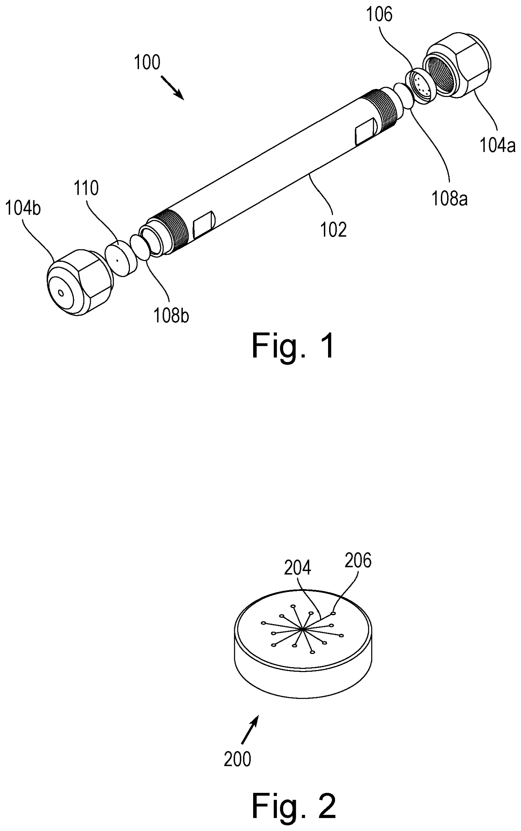

FIG. 1 is an explosive view of a chromatography column, according to an example. The chromatography column 100 may be any type of column used in a chromatography, particularly liquid chromatography, examples of which may include an analytical column, a preparative column, a capillary chromatography column, and a guard column. The chromatography column 100 may include a first end fitting 104a, a first flow distributor 106, a first frit 108a, a media chamber 102 containing a media, a second frit 108b, a second flow distributor 110, and a second end fitting 104b. When the chromatography column 100 is in use, a fluid to be analyzed may be introduced into the chromatography column 100 from inlet of the first end fitting 104a, through the first flow distributor 106, the first frit 108a, and into the chromatography column 100. The fluid then exits the media in the chromatography column 100 and passes through the second frit 108b, the second flow distributor 110, and the second end fitting **104b** to exit the chromatography column 100. In an example, the media chamber 102 may include a cylindrical cross section within which is packed separation media, for example, silane derivatized silica particles having a diameter of less than 20 microns.

In an example (not shown in the figures), an optional frit may be inserted into each end of the media chamber 102 to compress and stabilize the separation media that is packed under high pressure in the media chamber 102. The frits inserted into each end of the media chamber 102 may also help reestablish some of the pressure lost after the packing process when the pressure is removed to complete assembly of the media chamber 102. It may be advantageous to press the frits inserted at each end of the media chamber 102 with an interference fit to seal against the inner surface of the media chamber 102 and prevent the leakage of the packed separation media from the media chamber 102.

Also shown in FIG. 1, the chromatography column 100 may include the first flow distributor 106 positioned at the inlet of the media chamber 102. In an example, the first flow distributor 106 can be designed to receive a first frit 108a. The first frit **108a** may be the same or different from the optional frit that may have been inserted at one or both ends of the media chamber 102, as described above.

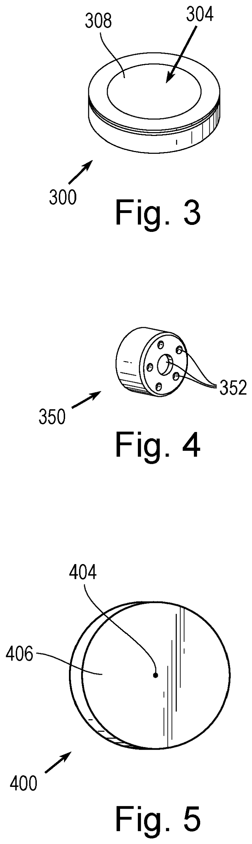

In an example, the first flow distributor 106 may include any design. For example, the first flow distributor 106 may include one opening, as shown in FIGS. 3 and 5 or may include a plurality of openings, as shown in FIG. 2. The opening(s) in the first flow distributor 106 are in fluid communication with the media chamber 102 via the first frit 108a. Therefore, the first flow distributor 106 may be fluidly interconnected with the media chamber 102.

The chromatography column 100 may also include the second flow distributor 110 positioned at the outlet of the media chamber 102. In an example, the second flow distributor 110 can be designed to receive a second frit 108b. The second frit **108b** may be the same or different from the first frit **108a** or the optional frit that may have been inserted at one or both ends of the media chamber 102, as described above.

In an example, the second flow distributor 110 may include any design that is different from the design of the first flow distributor 106. For example, if the first flow distributor 106 includes a plurality of openings, as shown in FIG. 2, then the second flow distributor 110 may include a design having a single opening, as shown in FIGS. 3 and 5. The opening(s) in the second flow distributor 110 are in fluid communication with the media chamber 102 via the second frit 108b. Therefore, the second flow distributor 110 may be fluidly interconnected with the media chamber 102.

In an example, as shown in FIG. 2, the first flow distributor 106 may be a showerhead-like flow distributor. The upper surface of the showerhead-like flow distributor 200 may be planar as a whole and may have a plurality of channels/grooves 204 arranged in a star fashion. These grooves 204 may be identical or different in cross-section, but of variable length. A first set of grooves 204 may radiate outwardly from the center for a first predetermined length to reach a first set of openings 206. Similar grooves of increasing or decreasing lengths may similarly extend from the center for a second predetermined length to reach a second set of openings 206. Other dimensions for angles and number of grooves applied may vary according to design specifications. The showerhead-like flow distributor 200 may be dimensioned and profiled with a sleeve, which may fit over an end of the media chamber 102, such as the inlet end of the media chamber 102, so that the under-side of the showerhead-like flow distributor 200 may be push-fitted (e.g., friction fitted) over the end of the media chamber 102.

In an example, when the first flow distributor 106 is a showerhead-like flow distributor 200, the second flow distributor 110 can be an open dispersion flow distributor 300, as shown in FIG. 3. The upper surface of the open dispersion flow distributor 300 may be planar as a whole and may have at least one opening, such as opening 304 at the center of its upper surface that can receive a frit 308. The open dispersion flow distributor 300 may also be dimensioned and profiled with a sleeve, which fits over the end of the media chamber 102.

In an example, when the second flow distributor 110 is the open dispersion flow distributor 300 and the first flow distributor 106 is the showerhead-like flow distributor 200, the surface area of the opening 304 of the open dispersion flow distributor 300 is larger than the sum of the surface areas of the openings 206 of the showerhead-like flow distributor 200. For example, the surface area of the opening 304 can occupy from about 99% to about 0.001% of the total surface area of the open dispersion flow distributor 300, such as from about 50% to about 90%, for example, about 80% or more. Additionally, the sum of the surface area of the openings 206 can occupy from about 0.001% to about 99% of the total surface are of the showerhead-like flow distributor 200, such as less than about 50%, or from about 0.001% to about 30%, for example, about 2% or less.

In another example, when the first flow distributor 106 is a showerhead-like flow distributor 200, the second flow distributor 110 may be a multi-hole flow distributor 350, which may include a plurality of openings 352, as shown in FIG. 4. In one example, the diameter of each opening in the multi-hole follow distributor 350 may be larger than the diameter of each openings 206 of the showerhead-like flow distributor 200. In an example, the sum of the surface area of the plurality of openings 352 of the multi-hole flow distributor 350 is larger than the sum of the surface area of the plurality of openings 206 of the showerhead-like flow distributor 200. For example, the sum of the surface area of the plurality of openings 352 can occupy from about 1% or less to about 70% of the total surface area of the multi-hole flow distributor 350, such as from about 1% or less to about 50%, for example, about 30% or less.

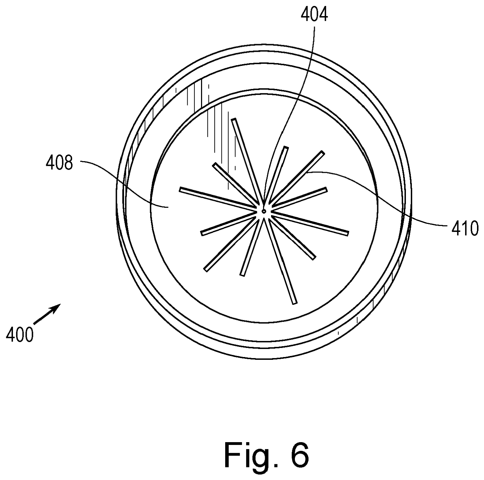

In an example, when the first flow distributor 106 is a showerhead-like flow distributor 200 or an open dispersion flow distributor 300, then the second flow distributor 110 may be a new flow distributor 400, as shown in FIGS. 5 and 6. The new flow distributor 400 may include an opening 404 that extends from its exterior surface 406 to its interior surface 408. The interior surface 408 of the new flow distributor 400 may include a plurality of channels/grooves 410 arranged in a star fashion. These grooves 410 may be identical or different in cross-section, but of variable length. A first set of grooves 410 may radiate outwardly from the center, where the opening 404 is positioned, for a first predetermined length. Similar grooves of increasing or decreasing lengths may similarly extend from the opening 404 for a second predetermined length. Other dimensions for angles and number of grooves applied may vary according to design specifications. The new flow distributor 400 may be dimensioned and profiled with a sleeve, which may fit over an end of the media chamber 102 , such as the outlet end of the media chamber 102, so that the under-side of the flow distributor 400 may be push-fitted (e.g., friction fitted) over the end of the media chamber 102.

The flow distributors 200, 300, 350, and **400** may be made of various polymer, for example, PTFE (polytetrafluoroethylene), ETFE (ethylene tetrafluoroethylene), PEEK (polyetheretherketone) or KEL-F^{®} (polychlorotrifluoro-ethylene). In general, any non-porous parts of the flow distributors **200,** 300, **350,** and **400** may be made of plastics or polymer, for example, PTFE, ETFE, PEEK or KEL-F. In an example, the flow distributors 200, 300, 350, and **400** may be made of PEEK.

In summary, having a chromatography column that includes a first flow distributor 106 at its inlet that is different from a second flow distributor 110 at its outlet, unexpectedly causes a reduced parabolic flow profile at outlet.

As discussed above, the first flow distributor 106 located at the inlet of the media chamber 102 and the second flow distributor 110 located at the outlet of the media chamber 102 are different. Thus, when the first flow distributor 106 is the showerhead-like flow distributor 200, then the second flow distributor 110 may be the open dispersion flow distributor 300, the multi-hole flow distributor 350, or the new flow distributor 400. In another example, when the first flow distributor 106 is the open dispersion flow distributor 300, then the second flow distributor 110 may be the showerhead-like flow distributor 200, the multi-hole flow distributor 350, or the new flow distributor 400. In another example, when the first flow distributer 106 is the multi-hole flow distributor 350, then the second flow distributor 110 may the showerhead-like flow distributor 200, the open dispersion flow distributor 300, or the new flow distributor 400. In yet another example, when the first flow distributor 106 is the new flow distributor 400, then the second flow distributor 110 may be the showerhead-like flow distributor 200, the multi-hole flow distributor 350, or the open dispersion flow distributor 300.

In an example, the end fittings 104a, 104b may coaxially surround the flow distributors 106, 110, with the inner surface of the end fittings 104a, 104b abutting the flow distributors 106, 110. The end fittings 104a, 104b may keep the frits 108a, 108b and the flow distributors 106, 110 in place. The end fittings 104a, 104b may also compress the packed separation media and be connected to the fluid lines of a chromatographic system. In an example, each end fittings 104a, 104b may include a bore at the center of its end surface, which has threads for engaging a fluid conduit fitting (not shown).

### EXAMPLES

The following examples illustrate the improved and unexpected performance of the chromatography column using the inventive flow distributor arrangement, which was tested on an Agilent 1290 Infinity II Preparative Liquid Chromatograph with a 0.3 mm flow cell using a Poroshell SB-C18 HPLC column (available from Agilent Technologies) and a UV detector set at 254 nm. The column had a diameter of 21.2 mm and a length of 50 mm and was configured with the showerhead-like flow distributor at the inlet end of the column. The second (outlet) flow distributor was changed, and the column performance was measured as Theoretical Plates (Plates) of a component peak using the European Pharmacopeia method based on the peak width at half height. Representative columns were evaluated using both an isocratic and gradient elution method.

### Example 1: Isocratic Elution Method

The test was performed using naphthalene as a test probe under the following chromatographic conditions:
Mobile Phase: 60% acetonitrile/40% water (v/v)
Flow Rate: 20 mL/min.

In this test, the first (inlet) flow distributor 106 was a showerhead-like flow distributor 200, and the second (outlet) flow distributor 110 was selected from a showerhead-like flow distributor 200, an open dispersion flow dispersion 300, or a new flow distributor 400.

Table 1 shows the effect on plates when changing the second (outlet) flow distributor.

**Table 1: Isocratic test results for naphthalene**

| Type of second (outlet) flow distributor | Number of replicates | Plates | StdDev |
|---|---|---|---|
| New | 9 | 6585 | 663 |
| Open dispersion | 9 | 6669 | 268 |
| Showerhead-like | 9 | 5405 | 457 |

### Example 2: Gradient Elution Method

The test was performed using methylparaben as a test probe under the following chromatographic conditions.
Mobile Phase:
Solvent A: 0.1% formic acid in water
Solvent B: 0.1% formic acid in acetonitrile
Gradient:

| | |
|---|---|
| 5%B | 0 min |
| 65%B | in 6 min |

Flow Rate: 20 mL/min.

In this test, the first (inlet) flow distributor 106 was a showerhead-like flow distributor 200, and the second (outlet) flow distributor 110 was selected from a showerhead-like flow distributor 200, an open dispersion flow dispersion 300, or a new flow distributor 400.

Table 2 shows the effect on plates when changing the second (outlet) flow distributor.

**Table 2: Gradient test results for methylparaben**

| Type of second (outlet) flow distributor | Number of replicates | Plates | StdDev |
|---|---|---|---|
| New | 6 | 48663 | 3898 |
| Open dispersion | 6 | 46051 | 2209 |
| Showerhead-like | 6 | 37871 | 2818 |

### Conclusions

Both the new and open dispersion flow distributors showed improved performance (higher plates) compared with the showerhead-like flow distributor for both the isocratic and gradient tests.

The open dispersion flow distributor demonstrated better reproducibility (lower StdDev) compared with the new flow distributor.

This disclosure is to be broadly construed. It is intended that this disclosure disclose equivalents, means, systems and methods to achieve the devices, activities and mechanical actions disclosed herein. For each device, article, method, mean, mechanical element or mechanism disclosed, it is intended that this disclosure also encompasses in its disclosure and teaches equivalents, means, systems and methods for practicing the many aspects, mechanisms and devices disclosed herein. Additionally, this disclosure is intended to encompass the equivalents, means, systems, and methods of the use of the device and/or article of manufacture and its many aspects consistent with the description and spirit of the operations and functions disclosed herein. The claims of this application are likewise to be broadly construed.

The description of the inventions herein in their many embodiments is merely exemplary in nature and, thus, variations that do not depart from the gist of the invention are intended to be within the scope of the invention. Such variations are not to be regarded as a departure from the spirit and scope of the invention.
The invention is further embodied by the followig items:
1. A chromatography column comprising:
   a first flow distributor;
   a second flow distributor different from the first flow distributor; and
   a media chamber having an inlet and an outlet, wherein the first flow distributor is secured to the inlet of the media chamber and the second flow distributor is secured to the outlet of the media chamber.
2. The chromatography column of item 1, wherein the first flow distributor includes an opening having a first surface area and the second flow distributor includes an opening having a second surface area.
3. The chromatography column of item 2, wherein the first surface area is smaller than the second surface area.
4. The chromatography column of item 1, wherein the first flow distributor includes a plurality of openings and the second flow distributor includes one opening.
5. The chromatography column of item 4, wherein the plurality of openings in the first flow distributor includes a sum surface area that is different from a surface area of the one opening in the second flow distributor.
6. The chromatography column of item 5, wherein the sum surface area of the plurality of openings in the first flow distributor is smaller than the surface area of the opening in the second flow distributor.
7. The chromatography column of item 1, wherein the first flow distributor includes a first plurality of openings and the second flow distributor includes at least one opening, wherein each of the first plurality of openings includes a diameter that is smaller than a diameter of at least one opening in the second flow distributor.
8. The chromatography column of item 1, wherein the first flow distributor is a showerhead-like flow distributor and the second flow distributor is an open dispersion flow distributor.
9. A chromatography column comprising:
   a first flow distributor;
   a second flow distributor; and
   a media chamber positioned between the first flow distributor and the second flow distributor, wherein the first flow distributor and the second flow distributor include a design that reduces a parabolic flow profile at outlet.
10. The chromatography column of item 9, wherein to reduce the parabolic flow profile at outlet, the first flow distributor is different from the second flow distributor.
11. The chromatography column of item 9, wherein the first flow distributor includes an opening having a first surface area and the second flow distributor includes an opening having a second surface area.
12. The chromatography column of item 9, wherein the first flow distributor includes a plurality of openings and the second flow distributor includes one opening.
13. The chromatography column of item 9, wherein the first flow distributor includes a first plurality of openings and the second flow distributor includes at least one opening, wherein each of the first plurality of openings includes a diameter that is smaller than a diameter of the at least one opening in the second flow distributor.
14. The chromatography column of item 9, wherein the first flow distributor is a showerhead-like flow distributor and the second flow distributor is an open dispersion flow distributor.
15. A method for reducing a parabolic flow profile in a chromatography column comprising:
   securing a first flow distributor at inlet of a media chamber; and
   securing a second flow distributor at outlet of the media chamber, wherein the first flow distributor is different from the second flow distributor.
16. The method of item 15, wherein the first flow distributor includes an opening having a first surface area and the second flow distributor includes an opening having a second surface area, wherein the first surface area is smaller than the second surface area.
17. The method of item 15, wherein the first flow distributor includes a plurality of openings and the second flow distributor includes one opening.
18. The method of item 15, wherein the first flow distributor includes a first plurality of openings and the second flow distributor includes at least one opening, wherein each of the first plurality of openings includes a diameter that is smaller than a diameter of the at least one opening in the second flow distributor.
19. A flow distributor comprising:
   an opening on exterior surface of the flow distributor; and
   a plurality of channels positioned on interior surface of the flow distributor, wherein each of the plurality of channels on the interior surface of the flow distributor is in fluid communication with the opening on the exterior surface of the flow distributor.
20. The flow distributor of item 19, wherein each of the plurality of channels includes a first length or a second length.

## Claims

1. A flow distributor (400) for a chromatography column, the flow distributor (400) comprising: an opening (404) on an exterior surface (406) of the flow distributor (400); and a plurality of channels (410) positioned on an interior surface (408) of the flow distributor (400), wherein each of the plurality of channels (410) on the interior surface (408) of the flow distributor (400) is in fluid communication with the opening (404) on the exterior surface (406) of the flow distributor (400).

2. The flow distributor of claim 1, wherein the channels comprise grooves (410) arranged in a star fashion.

3. The flow distributor of claim 2, wherein the grooves (410) are of variable length.

4. The flow distributor of claim 3, wherein a first set of the grooves (410) radiates outwardly from a center, wherein the opening (404) is positioned, for a first predetermined length, and a second set of grooves (410) of increasing or decreasing lengths extend from the opening (404) for a second predetermined length.

5. The flow distributor of any of claims 1 to 4, wherein the grooves (410) are identical or different in cross-section.

6. The flow distributor of any one of claims 1 to 5, wherein the opening (404) extends from the exterior surface (406) to the interior surface (408).

7. A chromatography column (100) comprising: a first flow distributor (106); a second flow distributor (110) different from the first flow distributor (106); and a media chamber (102) having an inlet and an outlet, wherein the first flow distributor (106) is secured to the inlet of the media chamber (102) and the second flow distributor (110) is secured to the outlet of the media chamber (102), wherein the second flow distributor (110) is a flow distributor according to any of claims 1 to 6.

8. The chromatography column (100) of claim 7, wherein the first flow distributor (106) is a showerhead-like flow distributor (200).

9. The chromatography column (100) of claim 8, wherein the showerhead-like flow distributor (200) comprises a plurality of openings (206).

10. The chromatography column (100) of claim 7, wherein the first flow distributor (106) is an open dispersion flow distributor (300).

11. The chromatography column (100) of claim 10, wherein the open dispersion flow distributor (300) comprises one opening (304).

12. The chromatography column (100) of any one of claims 7 to 11, further comprising a first frit (108a) between the first flow distributor (106) and the media chamber (102), and a second frit (108b) between the media chamber (102) and the second flow distributor (110).
